(19) Europäisches Patentamt / European Patent Office / Office européen des brevets

(11) **EP 3 533 768 B1**

(12) **EUROPEAN PATENT SPECIFICATION**

(45) Date of publication and mention
of the grant of the patent:
**14.08.2024   Bulletin 2024/33**

(21) Application number: **17863828.4**

(22) Date of filing: **17.10.2017**

(51) International Patent Classification (IPC):
**C03C 3/087** (2006.01)    **C03C 3/091** (2006.01)
**C03C 17/32** (2006.01)    **C08K 3/40** (2006.01)
**C08K 9/08** (2006.01)    **C08K 7/00** (2006.01)
**C03B 37/005** (2006.01)

(52) Cooperative Patent Classification (CPC):
(C-Sets available)
**C03C 17/322; C03B 37/005; C03C 3/087;
C03C 3/091; C08K 7/00; C08K 9/08;** C08K 3/40;
C08K 2201/014                                      (Cont.)

(86) International application number:
**PCT/JP2017/037485**

(87) International publication number:
**WO 2018/079335 (03.05.2018 Gazette 2018/18)**

(54) **FLAKY GLASS AND RESIN COMPOSITION**

BLÄTTRIGES GLAS UND HARZZUSAMMENSETZUNG

VERRE EN PAILLETTES, ET COMPOSITION DE RÉSINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.10.2016   JP 2016210514**

(43) Date of publication of application:
**04.09.2019   Bulletin 2019/36**

(73) Proprietor: **Nippon Sheet Glass Company, Limited
Tokyo 108-6321 (JP)**

(72) Inventor: **KATO, Shinichi
Tokyo 108-6321 (JP)**

(74) Representative: **Cabinet Beau de Loménie
158, rue de l'Université
75340 Paris Cedex 07 (FR)**

(56) References cited:
WO-A1-2013/121756    JP-A- 2004 091 507
JP-A- 2004 091 507    JP-A- 2005 059 278
JP-A- 2005 059 278    JP-A- 2011 094 070
JP-A- 2012 251 083    JP-A- 2012 251 083
JP-A- H 069 791    US-A1- 2012 220 709

(52) Cooperative Patent Classification (CPC): (Cont.)

C-Sets
**C08K 9/08, C08L 69/00**

**Description**

TECHNICAL FIELD

The present invention relates to glass flakes and a resin composition including the glass flakes.

BACKGROUND ART

For resin molded articles, it is commonly known that glass fibers, carbon fibers, mica, glass beads, glass flakes or the like are added as a filler to a matrix resin to achieve reduction in warping and deformation and/or enhancement of mechanical strength.

Conventionally, when glass flakes are used as a filler, glass flakes having an average thickness of several $\mu$m have been commonly used (see JP S63(1988)-201041 A and JP S63(1988)-225554 A, for example) in terms of productivity and cost. Recently, glass flakes having an average thickness of 1 $\mu$m or less have begun to be used (see WO 2007/111221 A1, for example) to improve the dimensional stability of resin molded articles including glass flakes as a filler and even the strength properties, such as tensile strength and flexural strength, thereof. Thin glass flakes with a titania coating are shown in JP 2005 059278 A, JP 2004 091507 A and JP 2012 251083 A. According to JP H06 009791 A, thermoplastic resin reinforcing glass flakes treated with a surface treatment have a diameter of 10 to 2000 $\mu$m and an average thickness of 0.8 to 1.4 $\mu$m and contain at least 90 wt.% flakes having a thickness of 0.3 to 3.0 $\mu$m. US 2012/220709 A1 shows glass flakes according to the preamble of claim 1.

SUMMARY OF INVENTION

Technical Problem

As described above, when thin glass flakes having an average thickness of 1 $\mu$m or less are used as a filler for resin molded articles, the strength properties, such as tensile strength and flexural strength, of the resultant resin molded article are improved. However, the use of glass flakes having such an average thickness as a filler causes a new problem in that the impact resistant properties of the resultant resin molded article are decreased and especially the notched impact strength thereof is greatly decreased.

It is therefore an object of the present invention to provide glass flakes capable, when used as a filler for reinforcing a resin molded article, of improving the impact resistant properties without greatly decreasing the strength properties, such as tensile strength and flexural strength, of the resultant resin molded article. Another object of the present invention is to provide a resin composition that contains such glass flakes and from which a resin molded article having both excellent strength properties and excellent impact resistant properties can be obtained.

Solution to Problem

Glass flakes of the present invention are glass flakes of claim 1.

The present invention also provides a resin composition including the above glass flakes of the present invention and a matrix resin.

Advantageous Effects of Invention

The glass flakes of the present invention are capable, when used as a filler for reinforcing a resin molded article, of improving the impact resistant properties without greatly decreasing the strength properties, such as tensile strength and flexural strength, of the resultant resin molded article. The resin composition of the present invention, which includes such glass flakes of the present invention, can be used to obtain a resin molded article having both excellent strength properties and excellent impact resistant properties.

BRIEF DESCRIPTION OF DRAWINGS

FIG. 1 is a schematic diagram illustrating an exemplary apparatus for producing glass flake substrates.
FIG. 2 is a schematic diagram illustrating another exemplary apparatus for producing glass flake substrates.

DESCRIPTION OF EMBODIMENTS

Hereinafter, an embodiment of the present invention will be described in detail.

The glass flakes of the present embodiment include first glass flake substrates and second glass flake substrates and satisfy at least either of the following conditions (A) and (B).

(A) An average thickness of the first glass flake substrates is 0.05 to 2 $\mu$m, an average thickness of the second glass flake substrates is 2 to 20 $\mu$m, and the average thickness of the second glass flake substrates is 3 or more times greater than the average thickness of the first glass flake substrates.

(B) A thickness D1 representing a modal value of a thickness distribution (on a number basis) of the first glass flake substrate is 0.03 to 2.5 $\mu$m, a thickness D2 representing a modal value of a thickness distribution (on a number basis) of the second glass flake substrates is 1.5 to 25 $\mu$m, and the thickness D2 is 2 or more times greater than the thickness D1.

The glass flakes of the present embodiment may only satisfy either of the above conditions (A) and (B), and desirably satisfy both of the conditions (A) and (B).

When the glass flakes of the present embodiment satisfy the above condition (A), the average thickness of the first glass flake substrates is 0.05 to 2 $\mu$m and preferably 0.1 to 1 $\mu$m. When the glass flakes of the present embodiment satisfy the above condition (B), the thickness D1 representing the modal value of the thickness distribution (on a number basis) of the first glass flake substrates is 0.03 to 2.5 $\mu$m and preferably 0.05 to 1.5 $\mu$m. The glass flakes of the present embodiment include the first glass flake substrates having the average thickness or thickness D1 within the above range. Therefore, when the glass flakes are added to a resin (matrix resin) as a filler to reinforce a resin molded article, the strength properties, such as tensile strength and flexural strength, of the resultant resin molded article are improved. The first glass flake substrates also contribute to improvement of the dimensional stability of the resultant resin molded article.

In the present specification, the average thickness of the glass flake substrates is a value determined by extracting 100 or more glass flake substrates, measuring the thickness of each glass flake substrate with a scanning electron microscope (SEM), and dividing the sum of the measured thickness values by the number of the glass flake substrates. The same applies to the average thickness of the second glass flake substrates described later.

In the present specification, the thickness representing the modal value of the thickness distribution (on a number basis) of the glass flake substrates is a thickness representing a modal value of a thickness distribution (on a number basis) determined by extracting 300 or more glass flake substrates and measuring the thickness of each glass flake substrate with an interference phase contrast microscope. The measurement of the thickness of a specimen (which is herein a glass flake substrate) with an interference phase contrast microscope will be described hereinafter. There is an optical path difference between light having passed through the specimen and light having passed through a surrounding medium of the specimen. This optical path difference is measured by observing the shift of interference fringes produced with an interferometer, and the thickness of the specimen is determined from the following equation (1). The same applies to the thickness distribution of the second glass flake substrates described later.

$$\text{Optical path difference } R = d\lambda/D = (n - N) \times Z \qquad (1)$$

d: Shift of interference fringes
D: Distance between interference fringes
$\lambda$: Measurement wavelength (white light: 0.55 $\mu$m)
n: Refractive index of specimen
N: Refractive index of surrounding medium
Z: Thickness of specimen

The average particle diameter of the first glass flake substrates is not particularly limited, and is preferably 10 to 2000 $\mu$m to achieve the reinforcing effect on resin molded articles more effectively. In the present specification, the average particle diameter of the glass flake substrates is a particle diameter (D50) at a cumulative mass percentage of 50% in a particle size distribution measured by a laser diffraction-scattering method. The same applies to the average particle diameter of the second glass flake substrates described later.

When the glass flakes of the present embodiment satisfy the above condition (A), the average thickness of the second glass flake substrates is 2 to 20 $\mu$m and preferably 3 to 15 $\mu$m. The average thickness of the second glass flake substrates is 3 or more times greater, preferably 4 or more times greater, and even more preferably 5 or more times greater than the average thickness of the first glass flake substrates. The average thickness of the second glass flake substrates is 400 or less times greater, preferably 100 or less times greater, and even more preferably 30 or less times greater than the average thickness of the first glass flake substrates.

When the glass flakes of the present embodiment satisfy the above condition (B), the thickness D2 representing the modal value of the thickness distribution (on a number basis) of the second glass flake substrates is 1.5 to 25 $\mu$m and preferably 2.5 to 20 $\mu$m. The thickness D2 representing the modal value of the thickness distribution (on a number basis) of the second glass flake substrates is 2 or more times greater, preferably 3 or more times greater, and even more preferably 4 or more times greater than the thickness D1 representing the modal value of the thickness distribution (on a number basis) of the first glass flake substrates. The thickness D2 representing the modal value of the thickness distribution (on a number basis) of the second glass flake substrates is 400 or less times greater, preferably 100 or less times greater, and even more preferably 30 or less times greater than the thickness D1 representing the modal value of the thickness distribution (on a number basis) of the first glass flake substrates.

The second glass flake substrates having the average thickness or thickness D2 within the above range are used in combination with the first glass flake substrates. Therefore, the glass flakes of the present embodiment are capable, when added to a resin as a filler to reinforce a resin molded article, of improving the impact resistant properties without greatly decreasing the strength properties of the resultant resin molded article.

One possible reason why the above effect can be obtained by the combination of the second glass flake substrates with the first glass flake substrates is as follows. The smaller the average thickness of glass flake substrates is made, the greater the aspect ratio (average particle diameter ÷ average thickness) of the glass flake substrates becomes. As a result, when the glass flake substrates are added to a resin, the strength properties, such as tensile strength and flexural strength, of the resultant resin article is improved. However, a small average thickness of glass flake substrates reduces the stress relaxation effect brought by the thickness of the glass flake substrates, and an even smaller average thickness makes glass flake substrates more likely to be broken into particles having small diameters when the glass flake substrates are kneaded into a resin. This is thought to tend to decrease the impact resistant properties of the resultant resin molded article. In the glass flakes of the present embodiment, the first glass flake substrates having a small average thickness are used in combination with the second glass flake substrates having an average thickness of 3 or more times greater than the average thickness of the first glass flake substrates. The combination use makes it possible both to achieve the improving effect of the first glass flake substrates on the strength properties and to obtain the stress relaxation effect brought by the thickness of the second glass flake substrates and, moreover, the effect allowing maintenance of large particle diameters even after the addition to a resin. Therefore, it is thought that the glass flakes of the present embodiment can also achieve the improvement of the impact resistant properties.

In the glass flakes of the present embodiment, the proportion of the second glass flake substrates is preferably smaller than the proportion of the first glass flake substrates in terms of mass. In the glass flakes of the present embodiment, for example, the proportion of the second glass flake substrates is preferably more than 0 mass% and 40 mass% or less, preferably more than 0 mass% and 25 mass or less, and even more preferably more than 0 mass% and 10 mass% or less. The use of such glass flakes can impart both excellent strength properties and excellent impact resistant properties to the resultant resin molded article while preventing the resin molded article from having a greatly decreased strength properties due to an extremely high proportion of the second glass flake substrates.

When the glass flakes of the present embodiment satisfy the above condition (B), at least two peaks appear in a thickness distribution (on a number basis) of a mixture of the first glass flake substrates and second glass flake substrates. It is thought that, of the two peaks, the peak on the small thickness side is within a thickness range of 0.03 to 2.5 $\mu$m and the other peak on the great thickness side is within a range of 1.5 to 25 $\mu$m. That is, the mixture of the first glass flake substrates and second glass flake substrates is thought to have a peak corresponding to the thickness D1 of the first glass flake substrates and a peak corresponding to the thickness D2 of the second glass flake substrates in the thickness distribution. Therefore, in other words, an example of the glass flakes of the present embodiment can be defined as having a thickness distribution (on a number basis) with at least two peaks, one of which is within a thickness range of 0.03 to 2.5 $\mu$m and the other of which is within a thickness range of 1.5 to 25 $\mu$m.

Commonly known glass compositions can be used as compositions of the first and second glass flake substrates. Specifically, a glass with a low alkali metal oxide content, such as E-glass, can be suitably used. A typical composition of E-glass is shown below. In the composition, the unit is mass%.

$SiO_2$: 52 to 56
$Al_2O_3$: 12 to 16
CaO: 16 to 25
MgO: 0 to 6
$Na_2O + K_2O$: 0 to 2 (Preferably 0 to 0.8)
$B_2O_3$: 5 to 13
$F_2$: 0 to 0.5

For the glass with a low alkali metal oxide content, a glass composition including the following components in mass% and substantially free of $B_2O_3$, F, ZnO, BaO, SrO, and $ZrO_2$ can be employed:

$59 \leq SiO_2 \leq 65$,
$8 \leq Al_2O_3 \leq 15$,
$47 \leq (SiO_2 - Al_2O_3) \leq 57$,
$1 \leq MgO \leq 5$,
$20 \leq CaO \leq 30$,
$0 < (Li_2O + Na_2O + K_2O) < 2$, and
$0 \leq TiO_2 \leq 5$.

This glass composition is disclosed by the present applicant in WO 2006/068255 A1.

Being "substantially free" means that the components are not included intentionally except for those inevitably introduced from, for example, industrial materials. Specifically, being "substantially free" means that the content of each of $B_2O_3$, F, ZnO, BaO, SrO, and $ZrO_2$ is less than 0.1 mass% (preferably less than 0.05 mass% and more preferably less than 0.03 mass%).

The glass forming the first glass flake substrates and the glass forming the second glass flake substrates may have the same glass composition, or may have different compositions.

The first glass flake substrates and second glass flake substrates used in the glass flakes of the present embodiment may be glass flake substrates selected as appropriate from commercially-available glass flake substrates and satisfying the requirements imposed on the first glass flake substrates and second glass flake substrates of the present embodiment as to the average thickness or the thickness representing a modal value of a thickness distribution (on a number basis). Alternatively, the first glass flake substrates and second glass flake substrates used in the glass flakes of the present embodiment may be produced, for example, by so-called blow process as disclosed in JP S41(1966)-017148 B or JP S45(1970)-003541 B or so-called rotary process as disclosed in JP S59(1984)-021533 A or JP H02(1990)-503669 A.

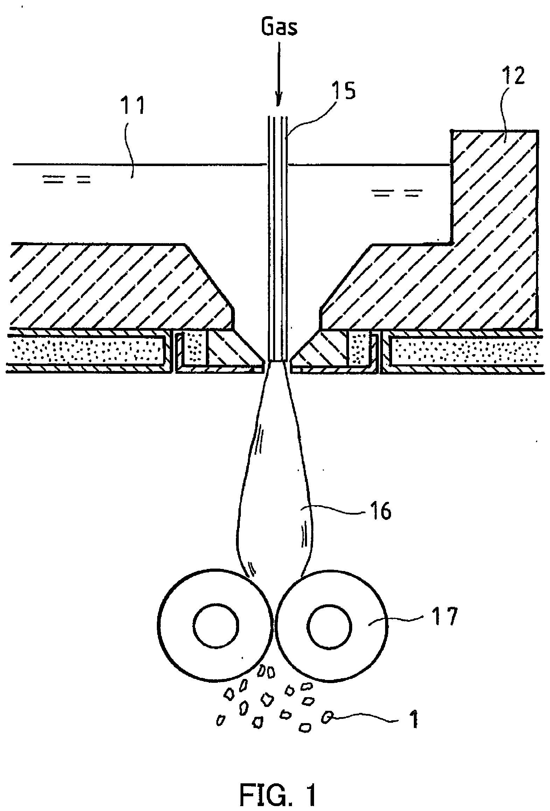

For the blow process, a glass production apparatus shown in FIG. 1 can be employed. The glass production apparatus is equipped with a refractory tank furnace 12, blowing nozzle 15, and pressing rolls 17. A glass raw material 11 is melted in the refractory tank furnace 12 (melting furnace) and is inflated into a balloon by a gas delivered through the blowing nozzle 15, so that hollow glass 16 is obtained. The hollow glass 16 is crushed by the pressing rolls 17 to obtain glass flake substrates 1. The thickness of the glass flake substrates 1 can be controlled by adjusting, for example, the speed of pulling the hollow glass 16 and flow rate of the gas delivered through the blowing nozzle 15.

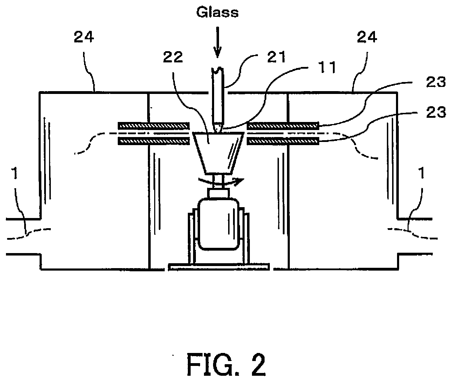

For the rotary process, a glass production apparatus shown in FIG. 2 can be employed. The glass production apparatus is equipped with a rotary cup 22, pair of annular plates 23, and annular cyclone collector 24. A molten glass raw material 11 is poured into the rotary cup 22, centrifugally flows out from the upper edge of the rotary cup 22 in a radial manner, and is then drawn and carried into the annular cyclone collector 24 through the gap between the annular plates 23 by airflow. While passing through the annular plates 23, the glass is cooled and solidified into a thin film, which is then crushed into fine pieces to give glass flake substrates 1. The thickness of the glass flake substrates 1 can be controlled by adjusting, for example, the distance between the annular plates 23 and velocity of the airflow.

At least a portion of the surface of at least either of the first glass flake substrates or second glass flake substrates is covered by a coating including a binder component.

The binder component included in the coating is a binder component used for a surface treatment of glass flake substrates. Organic binder components which include methylcellulose, carboxymethyl cellulose, starch, carboxymethyl starch, hydroxyethyl cellulose, hydroxypropyl cellulose, polyvinyl alcohol, acrylic resins, epoxy resins, phenolic resins, vinyl acetate, and urethane resins and/or inorganic binder components which include liquid glass, colloidal silica, and colloidal alumina represent the binder component.

The coating may further include a coupling agent component for increasing the affinity between the glass surface and a matrix resin. As the coupling agent component, a silane coupling agent is preferably used, and a titanium coupling agent, aluminum coupling agent, zirconia coupling agent, etc. can also be used. Two or more coupling agents can be used in combination. Examples of the silane coupling agent include y-aminopropyltriethoxysilane, y-aminopropyltrimethoxysilane, y-ureidopropyltriethoxysilane, y-glycidoxypropyltrimethoxysilane, vinyltriethoxysilane, and y-methacryloxypropyltrimethoxysilane.

Other than the binder component and coupling agent component, the coating may include an additional component, such as a crosslinking agent, if necessary.

The method for forming the coating, namely, the method for surface-treating the glass flake substrates is not particularly limited. The surface treatment agent can be produced, for example, by mixing a hydrolyzed coupling agent component and a dispersion prepared by uniformly dispersing in water a resin or the like as the binder component with the aid of an emulsifier or the like. Alternatively, the surface treatment agent can be produced by adding a resin as the binder component, the coupling agent, etc. to an organic solvent at ordinary temperature and atmospheric pressure as appropriate and then by stirring the mixture to homogeneity. The obtained surface treatment agent is, for example, added to the glass flake substrates, which are stirred and then dried to form a coating covering at least a portion of the surface of the glass flake substrates. The method for accomplishing the addition of the surface treatment agent, stirring, and drying is not limited to specific ones. Examples of the method will be described hereinafter.

For example, the glass flake substrates are fluidized in a mixer such as a rotary disk mixer or Henschel mixer having a mixing vessel equipped with a rotating blade, a predetermined amount of the surface treatment agent is added to the flowing glass flake substrates by a means such as a spray, and the glass flake substrates and binder are mixed and stirred. Then, the glass flake substrates are dried under stirring in the mixer, or the glass flake substrates are taken out of the mixer and dried. In this manner, a coating can be formed on the surface of the glass flake substrates.

In another example, a coating can be formed on the surface of the glass flake substrates by tumbling granulation as described in JP H02(1990)-124732 A. That is, a coating can be formed on the surface of the glass flake substrates by placing the glass flake substrates in a horizontal oscillating granulator equipped with a stirring blade, spraying the surface treatment agent onto the glass flake substrates, and performing granulation.

A coating can be formed on the surface of the glass flake substrates also by using known methods other than the above examples, such as methods generally called stirring granulation, fluidized bed granulation, injection granulation, and rotary granulation.

The drying step is accomplished, for example, by heating the glass flake substrates to a temperature equal to or higher than the boiling point of the solvent used in the surface treatment agent and drying the glass flake substrates until the solvent fully evaporates.

The proportion of the coating in the glass flakes can be controlled by, for example, adjusting the concentration of solids in the surface treatment agent to be added or sprayed.

When the above surface treatment is provided for the first glass flake substrates and second glass flake substrates, the first glass flake substrates and second glass flake substrates may be mixed before or after the surface treatment. That is, mixing of the first and second glass flake substrates is followed by addition of the surface treatment agent to the mixed flake substrates, stirring, and drying, or the first glass flake substrates and second glass flake substrates separately surface-treated beforehand may be mixed. However, when the first glass flake substrates and second glass flake substrates separately surface-treated beforehand have been subjected to a process for, for example, granulation of the glass flake substrates in conjunction with the surface treatment, mixing of these glass flake substrates, which are both granular, may cause inhomogeneity during transport or depending on conditions of use because of varying grain diameters. Therefore, the surface treatment is preferably performed after the first glass flakes and second glass flakes are mixed.

Next, the resin composition of the present embodiment will be described.

The resin composition of the present embodiment includes the above-described glass flakes of the present embodiment and a matrix resin.

Examples of the matrix resin include, but are not particularly limited to: thermoplastic resins including polyolefins such as polybutylene, polypropylene, and polyethylene, polyesters such as thermoplastic polyester resins typified by polybutylene terephthalate, polycarbonate, polyvinyl chloride, polystyrene, polyamide, copolymers thereof, polyphenylene sulfide, polyphenylene ether, polyetheretherketone, and liquid-crystal polymers (including types I, II, and III); and thermosetting resins including epoxy resins, urethane resins, unsaturated polyester resins, phenolic resins, urea resins, melamine resins, and silicone resins. The glass flakes of the present embodiment can achieve high reinforcing effect on a resin molded article especially when a thermoplastic resin is used as the matrix resin. The glass flakes of the present embodiment can achieve even higher reinforcing effect especially when polycarbonate and polybutylene terephthalate are used.

The content of the glass flakes in the resin composition is preferably 5 to 70 mass%. Controlling the content to 5 mass% or more allows the glass flakes to fully exhibit their function as a reinforcing material. Controlling the content to 70 mass% or less makes it possible to uniformly disperse the glass flakes in the resin composition. To further reduce the mold shrinkage factor, the content of the glass flakes is more preferably 30 mass% or more and 60 mass% or less.

The resin composition may, depending on its intended use, contain a reinforcing material other than the glass flakes, such as glass fibers. For example, when the resin composition is used for a part of an electric or electronic device, the resin composition may contain glass fibers in an amount comparable to that of the glass flakes since such a part needs to have very high strength.

Owing to the inclusion of the glass flakes of the present embodiment, a resin molded article produced using the resin composition of the present embodiment can achieve both excellent strength properties, such as high tensile strength and flexural strength, and excellent impact resistant properties.

EXAMPLES

Hereinafter, the present invention will be described in more detail using examples.

[Example 1]

(Glass flakes)

First, the following two types of glass flake substrates were prepared as the first glass flake substrates and second glass flake substrates. The values specified below of the average thickness of the first glass flake substrates and second glass flake substrates are those obtained by extracting 100 glass flake substrates, measuring the thickness of each glass flake substrate with a SEM, and determining an average of the measured values. The values specified below of the thickness D1 and D2 representing modal values of thickness distributions (on a number basis) of the first glass flake substrates and second glass flake substrates are those obtained by extracting 300 glass flake substrates, measuring the thickness of each glass flake substrate with an interference phase contrast microscope, and determining the thickness representing a modal value from the resultant thickness distribution (on a number basis). First glass flake substrates: "MICROGLAS FINEFLAKE (registered trademark) MEG160FY" (E-glass, average thickness: 0.7 pm, thickness D1: 0.7 $\mu$m $\pm$ 25%, average particle diameter: 160 um) manufactured by Nippon Sheet Glass Co., Ltd. Second glass flake substrates: "MICROGLAS (registered trademark) GLASFLAKE (registered trademark) REF-160" (E-glass, average thickness: 5 $\mu$m, thickness D2: 5 $\mu$m $\pm$ 25%, average particle diameter: 160 um) manufactured by Nippon Sheet Glass Co., Ltd.

The first glass flake substrates and second glass flake substrates were uniformly mixed at the following mass ratio:
First glass flake substrates:second glass flake substrates = 25.8:4.2.

Next, 5 kg of the resultant mixture of the glass flake substrates was placed in a Henschel mixer. While a surface treatment agent containing a binder component and coupling agent component was being added by spraying, the contents of the mixer were mixed and stirred for 15 minutes. The surface treatment agent used here was a mixture containing y-aminopropyltriethoxysilane (Sila-Ace S330 manufactured by Chisso Corporation) as a silane coupling agent and a bisphenol A-type epoxy resin emulsion as a binder component at a ratio of 10:90 (mass ratio) on a solids basis.

Subsequently, glass flakes (undried) were taken out of the mixer and dried by a dryer at 125°C for 8 hours. Glass flakes of Example 1 were thus obtained.

The deposit ratio of the coating (solids of the surface treatment agent) in the obtained glass flakes was examined by loss on ignition. Specifically, a proper amount of the glass flakes was dried at 110°C, and then heated in an atmosphere at 625°C to remove the binder from the surface of the glass flakes. The deposit ratio of the coating in the glass flakes was calculated from the difference between the mass of the glass flakes before the heating and the mass of the glass flakes after the heating. Table 1 shows the results.

(Resin molded article)

The glass flakes of Example 1 and polycarbonate (Iupilon S3000F manufactured by Mitsubishi Engineering-Plastics Corporation) were kneaded by an extrusion molding machine (KZW15-30 MG manufactured by Technovel Corporation, molding temperature: about 270 to 280°C) to obtain a resin composition including polycarbonate as a matrix resin and glass flakes as a reinforcing filler. The resin composition was molded by an injection molding machine (HM7 manufactured by NISSEI PLASTIC INDUSTRIAL CO., LTD.) to obtain a resin molded article. The content of the glass flakes in the obtained resin molded article was 30 mass%.

The properties of the resin molded article were examined. The maximum tensile strength was measured according to JIS K 7113. The maximum flexural strength and the flexural modulus were measured according to JIS K 7171. The Izod impact strength was measured according to JIS K 7111-1. The measurement results are shown in Table 1.

[Examples 2 to 8]

(Glass flakes)

The following two types of glass flake substrates (surface-treated) were prepared as the first glass flake substrates and second glass flake substrates. The values specified below of the average thickness of the two types of the glass flakes were measured before the surface treatment. First glass flake substrates: "MICROGLAS FINEFLAKE (registered trademark) MEG160FY-M01" (E-glass, average thickness: 0.7 $\mu$m, average particle diameter: 160 $\mu$m, deposit ratio of coating (solids (binder component: bisphenol A-type epoxy resin) of surface treatment agent): 0.7 mass%) manufactured by Nippon Sheet Glass Co., Ltd.
Second glass flake substrates: "MICROGLAS (registered trademark) FLEKA (registered trademark) REFG-301" (E-glass: average thickness: 5 $\mu$m, average particle diameter: 160 $\mu$m, deposit ratio of coating (solids (binder component: bisphenol A-type epoxy resin) of surface treatment agent): 0.6 mass%) manufactured by Nippon Sheet Glass Co., Ltd.

The bisphenol A-type epoxy resin used in Example 1 and the bisphenol A-type epoxy resins included as the binder component in MEG160FY-M01 and REFG-301 are the same.

The first glass flake substrates and second glass flake substrates were uniformly mixed at a mass ratio shown in Table 1 to obtain glass flakes of each Example.

(Resin molded article)

With the glass flakes of Examples 2 to 8, resin molded articles were produced and their various properties were measured in the same manner as in Example 1. The results are shown in Table 1.

[Comparative Example 1]

Only one type of glass flake substrates, namely, "MICROGLAS FINEFLAKE (registered trademark) MEG160FY-M01" (E-glass, average thickness: 0.7 $\mu$m, average particle diameter: 160 $\mu$m, deposit ratio of coating (solids (binder component: bisphenol A-type epoxy resin) of surface treatment agent): 0.7 mass%) manufactured by Nippon Sheet Glass Co., Ltd., was used as glass flakes. A resin molded article was produced and its various properties were measured in the same manner as in Example 1, except that this type of glass flakes was used. The results are shown in Table 1.

[Comparative Example 2]

Only one type of glass flake substrates, namely, "MICROGLAS (registered trademark) FLEKA (registered trademark) REFG-301" (E-glass, average thickness: 5 $\mu$m, average particle diameter: 160 $\mu$m, deposit ratio of coating (solids (binder component: bisphenol A-type epoxy resin) of surface treatment agent): 0.6 mass%) manufactured by Nippon Sheet Glass Co., Ltd., was used as glass flakes. A resin molded article was produced and its various properties were measured in the same manner as in Example 1, except that this type of glass flakes was used. The results are shown in Table 1.

[Table 1]

| | | | | Example | | | | | | | | Comparative Example | |
|---|---|---|---|---|---|---|---|---|---|---|---|---|---|---|
| | | | | 1 | 2 | 3 | 4 | 5 | 6 | 7 | 8 | 1 | 2 |
| Resin composition | | Matrix resin (polycarbonate) | Mass% | 70 | 70 | 70 | 70 | 70 | 70 | 70 | 70 | 70 | 70 |
| | | Glass flakes | | | | | | | | | | | |
| | Glass flake substrates and surface treatment | MEG160FY (average thickness: 0.7 μm) + surface treatment (deposit ratio of coating: 0.7 mass%) | Mass% | 25.8 | 0 | 0 | 0 | 0 | 0 | 0 | 0 | 0 | 0 |
| | | REF-160 (average thickness: 5 μm) + surface treatment (deposit ratio of coating: 0.7 mass%) | Mass% | 4.2 | 0 | 0 | 0 | 0 | 0 | 0 | 0 | 0 | 0 |
| | | MEG160FY-M01 (average thickness: 0.7 μm + surface treatment (deposit ratio of coating: 0.7 mass%)) | Mass% | 0 | 29 | 28 | 27 | 25.8 | 25 | 20 | 10 | 30 | 0 |
| | | REFG-301 (average thickness 5 μm + surface treatment (deposit ratio of coating: 0.6 mass%)) | Mass% | 0 | 1 | 2 | 3 | 4.2 | 5 | 10 | 20 | 0 | 30 |
| | | Binder component included in coating | | Epoxy resin | | | | | | | | Epoxy resin | |
| Properties of molded article | | Maximum tensile strength | MPa | 82 | 86 | 84 | 83 | 82 | 82 | 77 | 72 | 84 | 69 |
| | | Maximum flexural strength | MPa | 139 | 136 | 136 | 137 | 138 | 137 | 127 | 119 | 139 | 115 |
| | | Flexural modulus | MPa | 6065 | 6174 | 6073 | 5964 | 6007 | 6118 | 5449 | 4931 | 6283 | 4581 |
| | | Izod impact strength N[*1] | kJ/m² | 2.6 | 2.5 | 2.4 | 2.5 | 2.6 | 2.8 | 2.9 | 3.1 | 2.1 | 4.4 |
| | | Izod impact strength UN[*2] | kJ/m² | 26 | 24 | 24 | 25 | 25 | 26 | 28 | 30 | 23 | 36 |
| Notes *1: Notched *2: Un-notched | | | | | | | | | | | | | |

The glass flakes in the resin molded article of Comparative Example 1 include only those produced by surface-treating the glass flake substrates having an average thickness of 0.7 $\mu$m. Although having excellent strength properties with high tensile strength, flexural strength, and flexural modulus, the resin molded article of Comparative Example 1 has poor impact resistant properties with low Izod impact strength. The glass flakes in the resin molded article of Comparative Example 2 include only those produced by surface-treating the glass flake substrates having an average thickness of 5 $\mu$m. Although having excellent impact resistant properties with high Izod impact strength, the resin molded article of Comparative Example 2 has poor strength properties with low tensile strength, flexural strength, and flexural modulus. Compared to these Comparative Examples, the resin molded articles of Examples 1 to 8 including two types of glass flake substrates having different average thicknesses have both excellent strength properties and excellent impact resistant properties, which are demonstrated by the achievement of the Izod impact strength higher than that of the resin molded article of Comparative Example 1 and the strength higher than that of the resin molded article of Comparative Example 2.

[Example 9]

A resin molded article was produced and its various properties were measured in the same manner as in Example 1, except that the binder component in the surface treatment agent was changed to ethyleneglycidylmethacrylate graft copolymer (PE-GMA), that the deposit ratio of the coating in the glass flakes was adjusted to 0.6 mass%, and that the mass ratio between the first glass flake substrates and second glass flake substrates was changed as shown in Table 2. The results are shown in Table 2.

[Comparative Example 3]

A resin molded article was produced and its various properties were measured in the same manner as in Example 9, except that only one type of glass flake substrates, namely, "GLASFLAKE (registered trademark) MEG160FY" (E-glass, average thickness: 0.7 $\mu$m, average particle diameter: 160 $\mu$m) manufactured by Nippon Sheet Glass Co., Ltd., was used as glass flakes. The results are shown in Table 2.

[Table 2]

| | | | | Example 9 | Comparative Example 3 |
|---|---|---|---|---|---|
| Resin composition | | Matrix resin (polycarbonate) | Mass% | 70 | 70 |
| | | Glass flakes | | | |
| | Glass flake substrates and surface treatment | MEG160FY (average thickness: 0.7 $\mu$m) + surface treatment (deposit ratio of coating: 0.6 mass%) | Mass% | 20 | 30 |
| | | REF-160 (average thickness: 5 pm) + surface treatment (deposit ratio of coating: 0.6 mass%) | Mass% | 10 | 0 |
| | | Binder component included in coating | | PE-GMA | PE-GMA |
| Properties of molded article | | Maximum tensile strength | MPa | 63 | 75 |
| | | Maximum flexural strength | MPa | 105 | 115 |
| | | Flexural modulus | MPa | 5202 | 6210 |
| | | Izod impact strength N*1 | kJ/m$^2$ | 5.3 | 4.8 |
| | | Izod impact strength UN*2 | kJ/m$^2$ | 21 | 20 |
| Notes *1: Notched *2: Un-notched | | | | | |

The glass flakes in the resin molded article of Comparative Example 3 include only those produced by surface-treating the glass flake substrates having an average thickness of 0.7 $\mu$m. Although having excellent strength properties with high tensile strength, flexural strength, and flexural modulus, the resin molded article of Comparative Example 3 has poor impact resistant properties with low Izod impact strength. Compared to the resin molded article of Comparative Example 3, the resin molded article of Example 9 including the glass flakes as used in Comparative Example 3 and the glass flakes produced by surface-treating the glass flake substrates having an average thickness of 5 μm maintains strength properties which, albeit being slightly inferior to the strength of the resin molded article of Comparative Example 3, are still excellent and has improved impact resistant properties. As just described, the resin molded article of Example 9 including two types of glass flake substrates having different average thicknesses has both excellent strength properties and excellent impact resistant properties.

INDUSTRIAL APPLICABILITY

The glass flakes of the present invention have both excellent strength properties and excellent impact resistant properties, and are therefore applicable to various uses. For example, a resin composition including the glass flakes of the present invention is suitably used in the automotive field, electrical and electronic part field, etc.

**Claims**

1. Glass flakes (1) comprising first glass flake substrates and second glass flake substrates, wherein

   the glass flakes (1) satisfy at least either of the following conditions (A) and (B):

   (A) an average thickness of the first glass flake substrates is 0.05 to 2 μm, an average thickness of the second glass flake substrates is 2 to 20 μm, and the average thickness of the second glass flake substrates is 3 or more times greater than the average thickness of the first glass flake substrates; and
   (B) a thickness D1 representing a modal value of a thickness distribution (on a number basis) of the first glass flake substrate is 0.03 to 2.5 μm, a thickness D2 representing a modal value of a thickness distribution (on a number basis) of the second glass flake substrates is 1.5 to 25 μm, and the thickness D2 is 2 or more times greater than the thickness D1,

   **characterized in that**
   at least a portion of a surface of at least either of the first glass flake substrates or the second glass flake substrates is covered by a coating comprising a binder component selected from organic binder components which include methylcellulose, carboxymethyl cellulose, starch, carboxymethyl starch, hydroxyethyl cellulose, hydroxypropyl cellulose, polyvinyl alcohol, acrylic resins, epoxy resins, phenolic resins, vinyl acetate, and urethane resins and/or inorganic binder components which include liquid glass, colloidal silica, and colloidal alumina.

2. The glass flakes (1) according to claim 1, wherein

   when the glass flakes satisfy the condition (A), the average thickness of the first glass flake substrates is 0.1 to 1 μm and the average particle diameter of the first glass flake substrates is 10 to 2000 μm, and
   when the glass flakes satisfy the condition (B), the thickness D1 of the first glass flake substrates is 0.05 to 1.5 μm and the average particle diameter of the first glass flake substrates is 10 to 2000 μm.

3. The glass flakes (1) according to claim 1 or 2, wherein

   when the glass flakes satisfy the condition (A), the average thickness of the second glass flake substrates is 3 to 15 μm and the average particle diameter of the second glass flake substrates is 10 to 2000 μm, and
   when the glass flakes satisfy the condition (B), the thickness D2 of the second glass flake substrates is 2.5 to 20 μm and the average particle diameter of the second glass flake substrates is 10 to 2000 μm.

4. The glass flakes (1) according to any one of claims 1 to 3, wherein a proportion of the second glass flake substrates is smaller than a proportion of the first glass flake substrates in terms of mass.

5. The glass flakes (1) according to claim 4, wherein the proportion of the second glass flake substrates is more than 0 mass% and 40 mass% or less.

6. The glass flakes (1) according to any one of claims 1 to 5, wherein

the glass flakes satisfy the condition (B) with at least the following two peaks in a thickness distribution (on a number basis) of a mixture of the first glass flake substrates and second glass flake substrates:

a peak on a small thickness side is within a thickness range of 0.03 to 2.5 $\mu$m, and
another peak on a great thickness side is within a range of 1.5 to 25 $\mu$m.

7.  A resin composition comprising:

the glass flakes (1) according to any one of claims 1 to 6; and
a matrix resin.


**Patentansprüche**

1.  Glasflocken (1), umfassend erste Glasflockensubstrate und zweite Glasflockensubstraten, wobei

die Glasflocken (1) mindestens eine der folgenden Bedingungen (A) und (B) erfüllen:

(A) eine durchschnittliche Stärke der ersten Glasflockensubstrate ist 0,05 bis 2 $\mu$m, eine durchschnittliche Stärke der zweiten Glasflockensubstrate ist 2 bis 20 $\mu$m und die durchschnittliche Stärke der zweiten Glasflockensubstrate ist 3 oder mehrere Male größer als die durchschnittliche Stärke der ersten Glasflockensubstrate; und
(B) eine Stärke D1, die einen Modalwert einer Stärkenverteilung (auf Zahlenbasis) des ersten Glasflockensubstrats darstellt, ist 0,03 bis 2,5 $\mu$m, eine Stärke D2, die einen Modalwert einer Stärkenverteilung (auf Zahlenbasis) des zweiten Glasflockensubstrats darstellt, ist 1,5 bis 25 $\mu$m und die Stärke D2 ist 2 oder mehrere Male größer als die Stärke D1,

**dadurch gekennzeichnet, dass**
mindestens ein Abschnitt einer Oberfläche von mindestens einem von den ersten Glasflockensubstraten oder den zweiten Glasflockensubstraten mit einer Beschichtung bedeckt ist, umfassend eine Bindemittelkomponente, die ausgewählt ist aus organischen Bindemittelkomponenten, die Methylcellulose, Carboxymethylcellulose, Stärke, Carboxymethylstärke, Hydroxyethylcellulose, Hydroxypropylcellulose, Polyvinylalkohol, Acrylharze, Epoxidharze, Phenolharze, Vinylacetat und Urethanharze beinhalten, und/oder anorganische Bindemittelkomponenten beinhalten, die flüssiges Glas, kolloidales Siliziumdioxid und kolloidales Aluminiumoxid beinhalten.

2.  Glasflocken (1) nach Anspruch 1, wobei

wenn die Glasflocken die Bedingung (A) erfüllen, die durchschnittliche Stärke der ersten Glasflockensubstrate 0,1 bis 1 $\mu$m ist und der durchschnittliche Teilchendurchmesser der ersten Glasflockensubstrate 10 bis 2000 $\mu$m ist, und
wenn die Glasflocken die Bedingung (B) erfüllen, die Stärke D1 der ersten Glasflockensubstrate 0,05 bis 1,5 $\mu$m ist und der durchschnittliche Teilchendurchmesser der ersten Glasflockensubstrate 10 bis 2000 $\mu$m ist.

3.  Glasflocken (1) nach Anspruch 1 oder 2, wobei

wenn die Glasflocken die Bedingung (A) erfüllen, die durchschnittliche Stärke der zweiten Glasflockensubstrate 3 bis 15 $\mu$m ist und der durchschnittliche Teilchendurchmesser der zweiten Glasflockensubstrate 10 bis 2000 $\mu$m ist, und
wenn die Glasflocken die Bedingung (B) erfüllen, die Stärke D2 der zweiten Glasflockensubstrate 2,5 bis 20 $\mu$m ist und der durchschnittliche Teilchendurchmesser der zweiten Glasflockensubstrate 10 bis 2000 $\mu$m ist.

4.  Glasflocken (1) nach einem der Ansprüche 1 bis 3, wobei ein Anteil der zweiten Glasflockensubstrate massebezogen kleiner ist als ein Anteil der ersten Glasflockensubstrate.

5.  Glasflocken (1) nach Anspruch 4, wobei der Anteil der zweiten Glasflockensubstrate mehr als 0 Masse-% und 40 Masse-% oder weniger ist.

6.  Glasflocken (1) nach einem der Ansprüche 1 bis 5, wobei

die Glasflocken die Bedingung (B) mit mindestens den folgenden zwei Peaks in einer Stärkenverteilung (auf Zahlenbasis) eines Gemischs aus den ersten Glasflockensubstraten und den zweiten Glasflockensubstraten erfüllen:

ein Peak auf einer Seite geringer Stärke ist in einem Stärkenbereich von 0,03 bis 2,5 $\mu$m, und
ein weiteres Peak auf einer Seite großer Stärke ist in einem Bereich von 1,5 bis 25 $\mu$m.

**7.** Harzzusammensetzung, umfassend:
die Glasflocken (1) nach einem der Ansprüche 1 bis 6; und ein Matrixharz.

**Revendications**

**1.** Paillettes de verre (1) comprenant des premiers substrats en paillettes de verre et des deuxièmes substrats en paillettes de verre, dans lesquelles

les paillettes de verre (1) satisfont au moins l'une ou l'autre des conditions (A) et (B) suivantes :

(A) une épaisseur moyenne des premiers substrats en paillettes de verre est de 0,05 à 2 $\mu$m, une épaisseur moyenne des deuxièmes substrats en paillettes de verre est de 2 à 20 $\mu$m, et l'épaisseur moyenne des deuxièmes substrats en paillettes de verre est de 3 fois ou plus supérieure à l'épaisseur moyenne des premiers substrats en paillettes de verre ; et
(B) une épaisseur D1 représentant une valeur modale d'une répartition d'épaisseur (sur une base numérique) du premier substrat en paillettes de verre est de 0,03 à 2,5 $\mu$m, une épaisseur D2 représentant une valeur modale d'une répartition d'épaisseur (sur une base numérique) des deuxièmes substrats en paillettes de verre est de 1,5 à 25 $\mu$m, et l'épaisseur D2 est de 2 fois ou plus supérieure à l'épaisseur D1,

**caractérisées en ce que**
au moins une partie d'une surface d'au moins l'un ou l'autre des premiers substrats en paillettes de verre ou des deuxièmes substrats en paillettes de verre est recouverte par un revêtement comprenant un composant liant sélectionné parmi des composants liants organiques qui incluent méthylcellulose, cellulose de carboxyméthyle, amidon, amidon de carboxyméthyle, cellulose d'hydroxyéthyle, cellulose d'hydroxypropyle, alcool polyvinylique, résines acryliques, résines époxy, résines phénoliques, acétate de vinyle et résines d'uréthane et/ou des composants liants inorganiques qui incluent verre liquide, silice colloïdale et alumine colloïdale.

**2.** Paillettes de verre (1) selon la revendication 1, dans lesquelles

lorsque les paillettes de verre satisfont la condition (A), l'épaisseur moyenne des premiers substrats en paillettes de verre est de 0,1 à 1 $\mu$m et le diamètre moyen des particules des premiers substrats en paillettes de verre est de 10 à 2000 $\mu$m, et
lorsque les paillettes de verre satisfont la condition (B), l'épaisseur D1 des premiers substrats en paillettes de verre est de 0,05 à 1,5 $\mu$m et le diamètre moyen des particules des premiers substrats en paillettes de verre est de 10 à 2000 $\mu$m.

**3.** Paillettes de verre (1) selon la revendication 1 ou 2, dans lesquelles

lorsque les paillettes de verre satisfont la condition (A), l'épaisseur moyenne des deuxièmes substrats en paillettes de verre est de 3 à 15 $\mu$m et le diamètre moyen des particules des deuxièmes substrats en paillettes de verre est de 10 à 2000 $\mu$m, et
lorsque les paillettes de verre satisfont la condition (B), l'épaisseur D2 des deuxièmes substrats en paillettes de verre est de 2,5 à 20 $\mu$m et le diamètre moyen des particules des deuxièmes substrats en paillettes de verre est de 10 à 2000 $\mu$m.

**4.** Paillettes de verre (1) selon l'une quelconque des revendications 1 à 3, dans lesquelles une proportion des deuxièmes substrats en paillettes de verre est inférieure à une proportion des premiers substrats en paillettes de verre en termes de masse.

**5.** Paillettes de verre (1) selon la revendication 4, dans lesquelles la proportion des deuxièmes substrats en paillettes de verre est supérieure à 0 % en masse et inférieure ou égale à 40 % en masse.

6. Paillettes de verre (1) selon l'une quelconque des revendications 1 à 5, dans lesquelles les paillettes de verre satisfont la condition (B) avec au moins les deux pics suivants dans une répartition d'épaisseurs (sur une base numérique) d'un mélange des premiers substrats en paillettes de verre et des deuxièmes substrats en paillettes de verre :

   un pic sur un côté de petite épaisseur est dans une plage d'épaisseurs de 0,03 à 2,5 $\mu$m, et
   un autre pic sur un côté de grande épaisseur est dans une plage de 1,5 à 25 $\mu$m.

7. Composition à base de résine comprenant :

   les paillettes de verre (1) selon l'une quelconque des revendications 1 à 6 ; et
   une résine matricielle.

FIG. 1

## FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S631988201041 A
- JP S631988225554 A
- WO 2007111221 A1
- JP 2005059278 A
- JP 2004091507 A
- JP 2012251083 A
- JP H06009791 A
- US 2012220709 A1
- WO 2006068255 A1
- JP S411966017148 B
- JP S451970003541 B
- JP S591984021533 A
- JP H021990503669 A
- JP H021990124732 A